# EUROPÄISCHE PATENTSCHRIFT

(11) **EP 1 399 288 B1**
(45) Veröffentlichungstag und Bekanntmachung des Hinweises auf die Patenterteilung: **15.03.2006**
(21) Anmeldenummer: 02754238.0
(22) Anmeldetag: 21.06.2002
(51) Int. Cl.: B23Q 1/52, B23Q 1/01, B23Q 1/70, B23Q 11/00, B23Q 5/28

(54) **WERKZEUGMASCHINE**
MACHINE TOOL
MACHINE-OUTIL

(30) Priorität: 26.06.2001 DE 20110420 U
(43) Veröffentlichungstag der Anmeldung: 24.03.2004
(73) Patentinhaber: Bonneick, Heinz, 38226 Salzgitter (DE); Andreu, Kostakis, 12357 Berlin (DE)
(72) Erfinder: Bonneick, Heinz, 38226 Salzgitter (DE); Andreu, Kostakis, 12357 Berlin (DE)
(74) Vertreter: Bremer, Ulrich
(86) Internationale Anmeldenummer: PCT/DE2002/002258
(87) Internationale Veröffentlichungsnummer: WO 2003/002294

(56) Entgegenhaltungen:
- DE-A- 19 740 042
- DE-A- 19 916 977
- US-A- 5 678 291

## Beschreibung

Die Erfindung bezieht sich auf eine Werkzeugmaschine, insbesondere ein Bearbeitungszentrum.

Werkzeugmaschinen der Gantry-Bauart weisen hierbei zwei Seitenwände auf, in denen z. B. Aussparungen ausgebildet sind, in denen die Werkstück-Halteeinrichtung gelagert ist. Die DE 19916977 A1 zeigt eine derartige Werkzeugmaschine. Der Antrieb für die Verschwenkbewegung der Werkstück-Halteeinrichtung erfolgt über einen mit seinem Motorgehäuse von außerhalb an eine Seitenwand angeflanschten Motor, z. B. einen Drehstrom-Motor mit Ausgangsgetriebe. Die Abtriebswelle ist in einer der beiden Ausnehmungen drehbar gelagert.

Problematisch an derartigen Werkzeugmaschinen ist insbesondere der relativ hohe apparative Aufwand der Lagerung der Werkstück-Halteeinrichtung in den Seitenwänden und die Abdichtung der Lager gegenüber Bearbeitungsresten wie z.B. Spänen und Öltropfen, die z. T. fein verteilt sind und sich in den Lagern festsetzen können. Hierbei können bereits geringe Beeinträchtigungen der Lager aufgrund der erforderlichen Einstellgenauigkeit bei der Bearbeitung von Werkstücken zum Ausfall der ganzen Maschine führen. Probleme treten bei den Werkzeugmaschinen der Gantry-Bauart insbesondere auf, wenn der gesamte Bereich zwischen den Seitenwänden als Bearbeitungsraum genutzt wird, da die Seitenwände nach außen getragene Bearbeitungsreste abfangen müssen.

Herkömmlicherweise kann eine Abdichtung durch zusätzliche Abdeckungen und Dichtringe erreicht werden, wodurch jedoch die Herstellungskosten erhöht werden und regelmäßige Wartungen und Reinigungen erforderlich sind.

Die DE 100 29 967 A1 zeigt eine Vorrichtung zum Bearbeiten von optischen Werkstücken mit einem Joch zur Aufnahme von Werkstücken, das von Zapfen getragen ist, die in den beiden Seitenwänden in Lagern gelagert sind. Einer der beiden Zapfen wird von einem Torque-Motor angetrieben, der in einer der beiden Seitenwände vorgesehen ist. Durch diese Anbringung des Motors ist grundsätzlich eine platzsparende Ausbildung möglich; allerdings sind auch bei dieser Maschine Lager zur Aufnahme des Jochs vorgesehen, die entsprechend abgedichtet werden müssen.

Die US 5,678,291 beschreibt eine Werkzeugmaschine, bei der der Arbeitsraum zwischen den Seitenwandungen ausgebildet ist, eine Spindel zur Aufnahme von Werkzeugen vorgesehen ist, und eine Werkstück-Halteeinrichtung mit ihren äußeren Enden durch Aussparungen der Seitenwände geführt wird. Hierbei sind an der Außenseite der Seitenwandungen ein oder zwei Antriebseinrichtungen vorgesehen, in die die Werkstück-Halteeinrichtungen eingesetzt werden. In den Aussparungen der Seitenwände sind Lagerbuchsen aus Stahl eingesetzt, in denen die Werkstück-Halteeinrichtungen gelagert sind.

Die DE 19740042 A1 beschreibt einen Teilapparat für Werkzeugmaschinen mit einem elektromotorisch angetriebenen Drehtisch zur Aufnahme von Werkstücken. Der Drehtisch lagert hierbei positionsgenau drehbar in einem Gehäuse. Hierzu ist das Getriebe ein Wolfrom-Planetenzahnradgetriebe. Als Motor ist ein Servo-Motor vorgesehen, dessen Rotor mit einer Antriebswelle starr verbunden ist. Das Wolfrom-Getriebe ist mehrfach gelagert; auch die Antriebswelle ist in dem Gehäuse gelagert.

Der Erfindung liegt die Aufgabe zugrunde, gegenüber bekannten Werkzeugmaschinen Verbesserungen zu schaffen und insbesondere einen sicheren, robusten und wartungsarmen Aufbau zu ermöglichen, bei dem dennoch eine genaue und vorteilhafterweise schnelle Verstellung der Werkstück-Halteeinrichtung sichergestellt ist.

Diese Aufgabe wird gelöst durch eine Werkzeugmaschine nach Anspruch 1.

Erfindungsgemäß wird der Motor nicht von außerhalb an der Seitenwand befestigt, sondern direkt in die Aussparung der Seitenwand gesetzt. Die Werkstück-Halteeinrichtung wird hierbei durch die starre Verbindung von der Abtriebswelle des Motors getragen. Der Motor kann insbesondere ein bürstenloser Motor, z. B. ein linearer Rundmotor mit Direktantrieb sein, dessen Abtriebswelle der Rotor bildet, der mit der Welle der Werkstück-Halteeinrichtung starr verbunden ist.

Durch die Aufnahme der Werkstück-Halteeinrichtung von zwei in den Seitenaufnahmen vorgesehenen Motoren entfallen auch - anders als z. B. in der DE 100 29 967 A1 - zusätzliche Lager der Werkstück-Halteeinrichtung in den Seitenwänden, da direkt die Motorlager zur Lagerung der Werkstück-Halteeinrichtung dienen. Hierdurch entfallen auch die oben beschriebenen Nachteile der Verwendung von Lagern in den Seitenwänden. Da das Motorlager durch das Motorgehäuse geschützt und gegenüber dem Außenraum abgedichtet ist, kann auch auf zusätzliche Abdichtungen verzichtet werden.

Erfindungsgemäß wird als Motor ein linearer Rundmotor verwendet, der mit seinem Motorgehäuse direkt in die Ausnehmung gesetzt wird, wobei sein Rotor starr mit der Welle der Werkstück-Halteeinrichtung verbunden ist. Durch diese Verwendung des linearen Rundmotors mit Direktantrieb kann ein bürstenloser Antrieb mit hohem Wirkungsgrad erfolgen, der genaue Verstellungen ermöglicht. Hierbei wird bei der starren Kopplung des Rotors mit der Welle der Werkstück-Halteeinrichtung eine getriebelose Ausbildung erreicht, so dass eine bauraumsparende Lösung erzielt wird, die in der Ausnehmung angeordnet wird und dennoch die erforderlichen Drehmomente liefert. Um eine kompakte Ausbildung zu erreichen, werden vorteilhafterweise in beiden einander gegenüber liegenden Seitenaufnahmen lineare Rundmotoren mit Direktantrieb vorgesehen, die somit kleiner dimensioniert werden können.

Erfindungsgemäß kann eine einteilige Ausbildung des Maschinenbettes mit den Seitenwänden, z. B. der Gantry-Bauart vorgesehen sein. Weiterhin können als Seitenaufnahmen auch Aufsätze, z. B. Böcke, verwendet werden, die an dem Maschinenbett befestigt werden und den Motor tragen. Die Seitenaufnahmen können hierbei in jedem seitlichen Bereich, z. B. auch an der Vorderseite oder Hinterseite der Werkzeugmaschine angebracht werden.

Die Aussparung kann direkt als Ausnehmung einer einteiligen Seitenwand gebildet sein. Alternativ hierzu kann als Seitenaufnahme auch eine mehrteilige Seitenwand vorgesehen sein. Z. B. kann die Aussparung durch einen Ring oder ein anderes eingesetztes Teil definiert werden, das von der restlichen Seitenwand - insbesondere auch einem einteiligen Seitenwandbereich - umgeben ist, so dass das Motorgehäuse über das eingesetzte Teil mit dem weiteren Seitenwandbereich verbunden ist.

Der ringförmige Rotor kann zum einen auf einen Flansch aufgesetzt sein, an dem die Welle der Werkstück-Halteeinrichtung befestigt ist. Alternativ hierzu kann der Rotor auch direkt auf der Welle der Werkstück-Halteeinrichtung angebracht sein.

Erfindungsgemäß kann die Werkzeugmaschine eine oder mehrere Spindeln sowie ein oder mehrere Drehtische aufweisen. Hierbei kann insbesondere eine dreidimensionale Spindel vorgesehen sein, die zusammen mit der verschwenkbaren Werkstück-Halteeinrichtung eine 4-Achsen-Werkzeugmaschine bzw. bei zusätzlicher Verwendung eines Drehtisches eine 5-Achsen-Werkzeugmaschine bildet. Die dreidimensional verfahrbare Spindel kann zusätzlich ein Gelenk aufweisen und somit 4-dimensional verstellbar sein. Alternativ hierzu kann auch eine zweidimensional verstellbare Spindel verwendet werden, z. B. bei Verwendung einer Werkstück-Halteeinrichtung mit einer weiteren Achse, z. B. translatorischer Verstellung.

Die Erfindung wird im Folgenden anhand der beiliegenden Zeichnungen an einigen Ausführungsformen näher erläutert. Es zeigen:
- Figur 1: eine geschnittene Vorderansicht einer Werkzeugmaschine gemäß einer Ausführungsform der Erfindung;
- Figur 2: eine perspektivische Ansicht der Werkzeugmaschine aus Figur 1;
- Figur 3: eine Seitenansicht der Werkzeugmaschine von Figur 1, 2;
- Figur 4: eine geschnittene Vorderansicht einer Werkzeugmaschine mit zwei verschiedenen Werkstück-Halteeinrichtungen;
- Figur 5: eine perspektivische Ansicht eines linearen Rundmotors der erfindungsgemäßen Werkzeugmaschine in teilweise gebrochener Darstellung;
- Figur 6: einen Axialschnitt durch den linearen Rundmotor von Figur 5;
- Figur 7: einen Axialschnitt durch einen linearen Rundmotor;
- Figur 8: eine Vorderansicht in teilweise gebrochener Darstellung der Werkzeugmaschine der Figuren 1 bis 3.

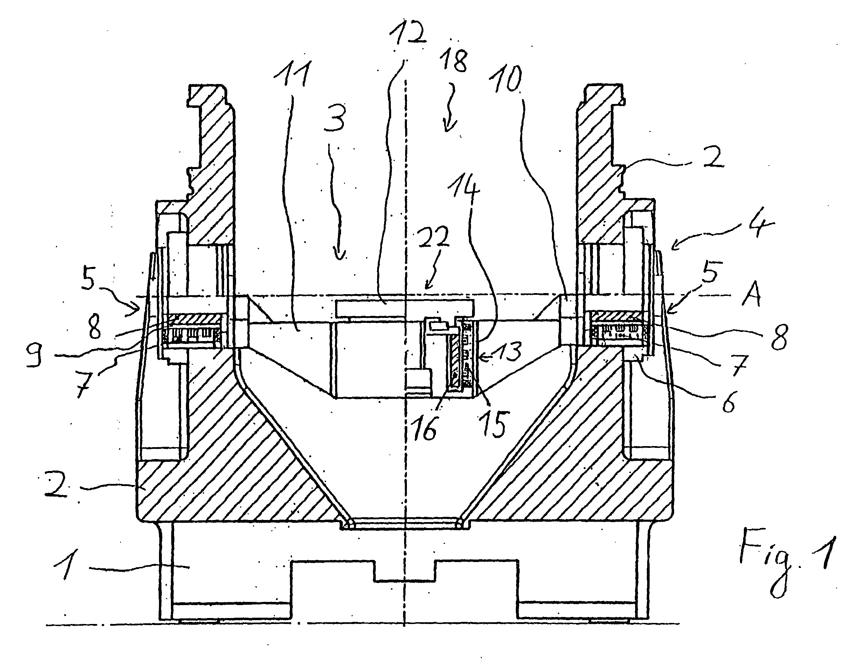

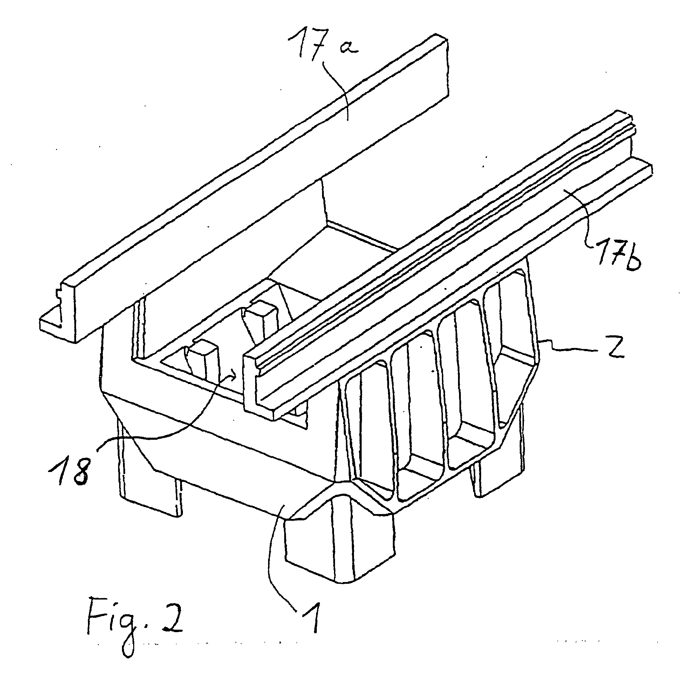

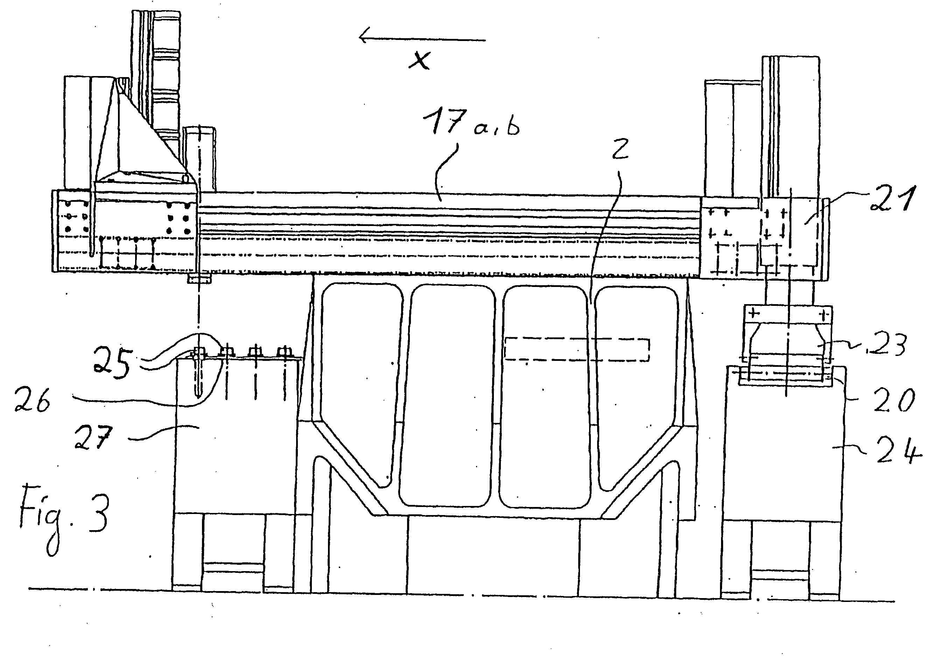

Gemäß Figur 1 weist eine Werkzeugmaschine ein Maschinenbett 1 mit zwei parallelen Seitenwänden 2 auf, auf deren Oberseite gemäß Figur 2 parallel verlaufende Längsschienen 17 a, b (Seitenschienen) angebracht sind, die zur Führung eines in Figur 3 gezeigten Längsschlittens dienen. Ein Arbeitsraum 18 ist zwischen den Seitenwänden 2 gebildet.

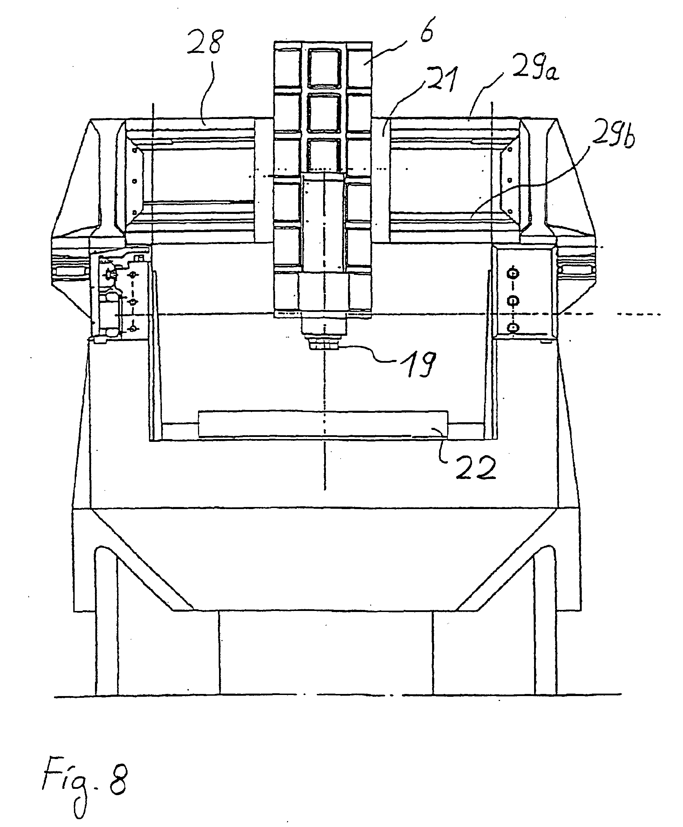

Der Längsschlitten weist gemäß Figur 8 eine Querführung 28 mit zwei parallelen Querschienen 29 a, b auf, auf denen ein Transportschlitten 21 in Querrichtung verschiebbar vorgesehen ist. An dem Transportschlitten 21 ist eine Spindel 19 höhenverstellbar angebracht. In der Spindel 19 können Werkzeuge 25 aufgenommen werden. Hierbei kann die Spindel die Werkzeuge 25 von einer außerhalb des Bearbeitungsraums 18 angeordneten Werkzeugablage 27, z. B. mit einer Lochplatte 26, aufnehmen und z. B. seitlich in den Bearbeitungsraum verfahren. Weiterhin kann die Spindel einen Greifer 23 aufnehmen, mittels dem auch Werkstücke 20 aufgenommen werden können und zu einer Aufnahmeeinrichtung 22 verfahren und abgelegt werden. Die Werkstücke 20 können hierbei über eine Werkstückzuführung 24 dem Greifer 23 zu einem Aufnahmebereich außerhalb des Bearbeitungsraums 18, d.h. außerhalb der Seitenwände 2, zugeführt werden.

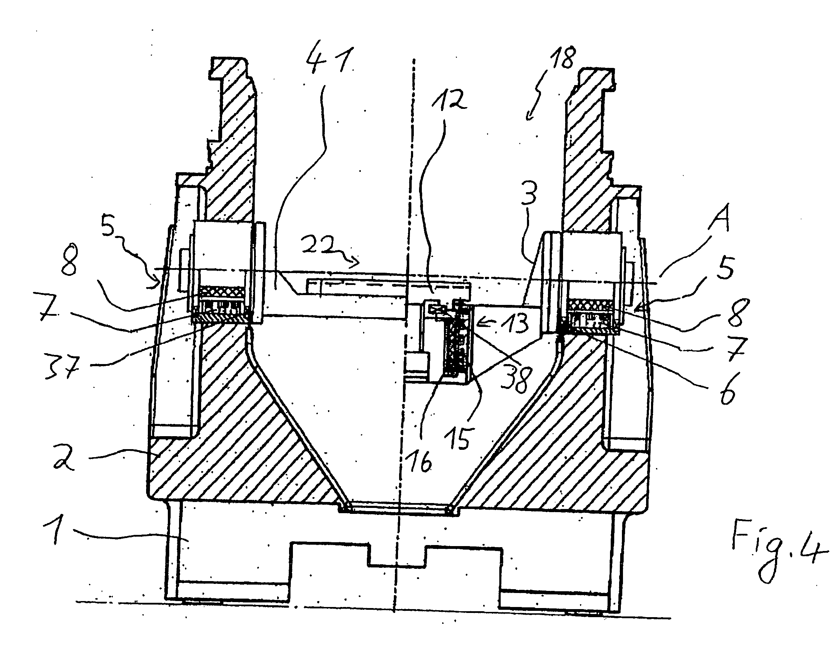

Die Aufnahmeeinrichtung 22 ist gemäß Figur 1 und 4 auf einer Werkstück-Halteeinrichtung 3 angebracht. Die Werkstück-Halteeinrichtung 3 ist hierbei über Haltearme 11 mit inneren Flanschen 10 verbunden.

Erfindungsgemäß sind in den Seitenwänden 2 zwei fluchtende Aussparungen 4 ausgebildet, wobei in jeder Aussparung 4 ein linearer Rundmotor 5 vorgesehen ist zur Verschwenkung der Werkstück-Halteeinrichtung 3 um eine Schwenkachse A. Ein Motorgehäuse 6 des Rundmotors 5 liegt mit einer in Figur 7 gezeigten z. B. zylindrischen Außenfläche 44 an der Innenseite der Aussparung 4 an, wobei das Motorgehäuse 6 z. B. in einem außen an der Seitenwand 2 anliegenden äußeren Flansch 43 an der Seitenwand 2 befestigt sein kann. Ein Lager 38 und ein Drehgeber 39 sind weiterhin in Fig. 7 dargestellt.

Als Werkstück-Halteeinrichtung können die in Figur 1, 8 und der rechten Hälfte von Figur 4 gezeigte U-förmige Werkstück-Halteeinrichtung verwendet werden, deren Aufnahmeeinrichtung 22 für Werkstücke unterhalb der Schwenkachse liegt. Hierbei kann insbesondere der in Figur 1 und 4 gezeigte Drehtisch 12 verwendet werden, so dass eine 5-Achsen-Bearbeitung möglich ist. Als Drehtischmotor 13 kann insbesondere ebenfalls ein linearer Rundmotor verwendet werden. Er kann insbesondere ein Gehäuse 14, einen Stator 15 und einen Rotor 16 aufweisen. Weiterhin kann als Werkstück-Halteeinrichtung auch der in der linken Hälfte von Figur 4 gezeigte Wendespanner 41 verwendet werden, bei dem das Werkstück in der Schwenkachse gedreht wird.

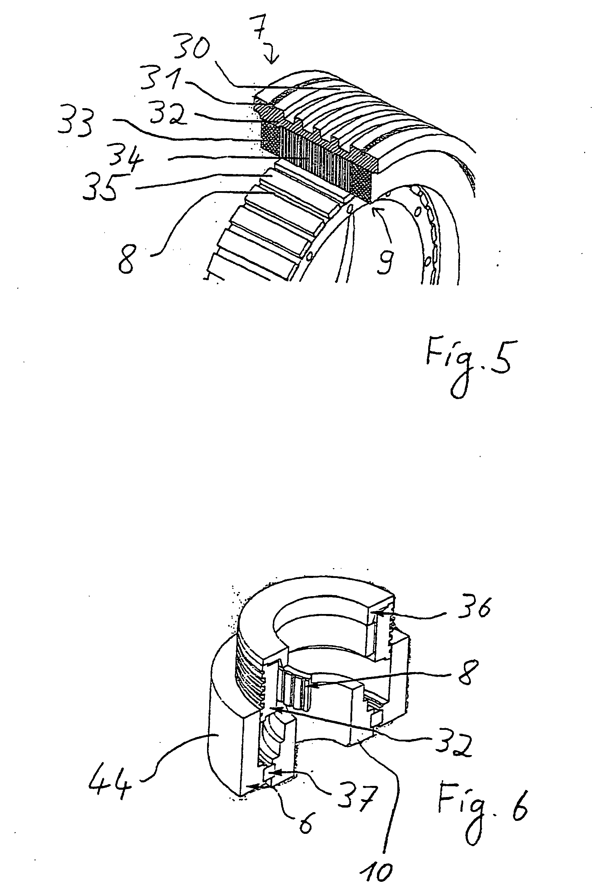

Der Aufbau der verwendeten linearen Rundmotoren ist in den Figuren 5 bis 7 am Beispiel der Motoren der Werkstück-Halteeinrichtung gezeigt und entsprechend auf den Drehtischmotor 13 zu übertragen. In dem Motorgehäuse ist der Stator 7 fest angebracht und weist einen Statorrahmen 32 mit einer Wasserkühlung 30 in z. B. in Umfangsrichtung beziehungsweise schraubenförmig umlaufenden Rillen auf, die axial nach außen durch eine Dichtung 31 abgedichtet werden und radial nach außen z. B. von dem Motorgehäuse abgedichtet werden. Alternativ hierzu ist auch eine Luftkühlung möglich, da die Werkstück-Halteeinrichtung bei den meisten Bearbeitungsvorgängen nicht dauerhaft gedreht, sondern lediglich in gewünschte Positionen verschwenkt wird. Radial innerhalb des Statorrahmens 32 sind axial außen Wicklungsbereiche 33 vorgesehen, zwischen denen ein Lamellenanker 34 angebracht ist. Über einen radialen Luftspalt 9 getrennt ist der Rotor 8 mit Permanentmagneten 35 vorgesehen.

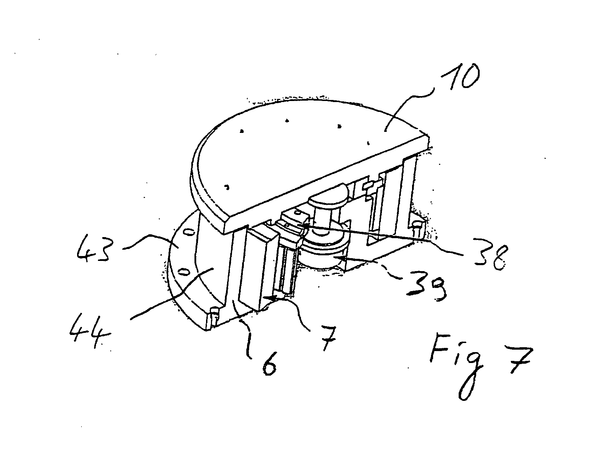

Der Rotor 8 kann hierbei direkt auf die Welle der Werkstück-Halteeinrichtung oder wie in Fig. 6 gezeigt (bzw. angedeutet) auf den Flansch 10 aufgesetzt sein, wobei der Flansch beziehungsweise die Welle gegenüber dem Motorgehäuse 6 in Lagern 37 gelagert ist, die somit die Motorlager 37 darstellen. Sie stellen die einzige Lagerung der Welle der Werkstück-Halteeinrichtung 3 dar, da keine zusätzlichen Lager in den Seitenwänden 2 vorgesehen sind. Eine Brücke 36 aus ferromagnetischem Material dient als Einbauhilfe und magnetische Abschirmung gegenüber dem Außenraum.

## Patentansprüche

1. Werkzeugmaschine, mit mindestens folgenden Merkmalen:
einem Maschinenbett (1),
einer verfahrbaren Spindel (19),
zwei auf seitlichen Bereichen des Maschinenbettes (1) angeordneten Seitenaufnahmen (2), wobei in jeder Seitenaufnahme (2) eine Aussparung (4) ausgebildet ist,
einer Werkstück-Halteeinrichtung (3), die schwenkbar in den Aussparungen (4) vorgesehen ist, und
zwei Motoren (5) zum Schwenken der Werkstück-Halteeinrichtung (3), wobei die Motoren (5) mit Abtriebswellen (8) versehen sind,
wobei jeder Motor (5) mit seinem Motorgehäuse (6) an der Seitenaufnahme (2) befestigt ist,
**dadurch gekennzeichnet, dass**
die Motoren (5) in den Aussparungen (4) der Seitenaufnahmen (2) angeordnet sind,
jeder Motor (5) mit seinem Motorgehäuse (6) in der Aussparung (4) anliegt,
jeder Motor (5) einen Direktantrieb ist, wobei er ein linearer Rundmotor (5) ist, dessen Abtriebswelle sein Rotor (8) ist,
die Werkstück-Halteeinrichtung (3) mit Abtriebswellen (8) der Motoren (5) starr verbunden ist und von den Abtriebswellen (8) getragen ist, und
als Lagerung der Werkstück-Halteeinrichtung (3) Motorlager (37) der beiden Motoren vorgesehen sind,
die Motoren (5) jeweils frei von einem Ausgangsgetriebe sind, und
die Werkstück-Halteeinrichtung (3) lediglich in den Motorlagern (37) der Motoren (5) und ohne in den Seitenaufnahmen (2) vorgesehenen Lagern gelagert ist.

2. Werkzeugmaschine nach Anspruch 1, **dadurch gekennzeichnet, dass** die Aussparungen (4) in den Seitenaufnahmen (2) fluchten und zwischen den Seitenaufnahmen (2) der Bearbeitungsraum (18) der Werkzeugmaschine gebildet ist.

3. Werkzeugmaschine nach Anspruch 1 oder 2, **dadurch gekennzeichnet, dass** die Motoren (5) bürstenlos sind.

4. Werkzeugmaschine nach einem der vorherigen Ansprüche, **dadurch gekennzeichnet, dass** jeder Motor (5) einen an dem Motorgehäuse (6) befestigten Stator (7) aufweist, in dem der Rotor (8) angeordnet ist.

5. Werkzeugmaschine nach einem der vorherigen Ansprüche, **dadurch gekennzeichnet, dass** sie frei ist von Abdichtungen zwischen den Motoren (5) und dem Bearbeitungsraum (18).

6. Werkzeugmaschine nach einem der vorherigen Ansprüche, **dadurch gekennzeichnet, dass** die Spindel (19) dreidimensional verfahrbar ist.

7. Werkzeugmaschine nach Anspruch 6, **dadurch gekennzeichnet, dass** die Spindel (19) ein Gelenk, vorzugsweise ein Knickgelenk, aufweist.

8. Werkzeugmaschine nach einem der vorherigen Ansprüche, **dadurch gekennzeichnet, dass** der Rotor (8) direkt auf einer Welle der Werkstück-Halteeinrichtung (3) angebracht ist.

9. Werkzeugmaschine nach einem der Ansprüche 1 bis 7, **dadurch gekennzeichnet, dass** der Rotor (8) auf einem Flansch (10) angebracht ist, an dem die Werkstück-Halteeinrichtung (3), vorzugsweise mit ihren Haltearmen (11), starr befestigt ist.

10. Werkzeugmaschine nach einem der vorherigen Ansprüche, **dadurch gekennzeichnet, dass** zumindest eine Seitenaufnahme ein von dem Maschinenbett getrennt ausgebildeter und mit dem Maschinenbett verbundener Aufsatz ist.

11. Werkzeugmaschine nach einem der vorherigen Ansprüche, **dadurch gekennzeichnet, dass** zumindest eine Seitenaufnahme eine Seitenwand (2) ist, die mit dem Maschinenbett (1) einteilig ausgebildet ist.

12. Werkzeugmaschine nach Anspruch 11, **dadurch gekennzeichnet, dass** beide Seitenaufnahmen Seitenwände (2) sind.

13. Werkzeugmaschine nach Anspruch 12, **dadurch gekennzeichnet, dass** auf den Seitenwänden (2) jeweils eine Seitenschiene (17) zur Führung eines Längsschlittens angeordnet ist.

14. Werkzeugmaschine nach Anspruch 13, **dadurch gekennzeichnet, dass** der Längsschlitten Querschienen (29 a,b) zur Führung eines Transportschlittens aufweist.

15. Werkzeugmaschine nach Anspruch 14, **dadurch gekennzeichnet, dass** die Spindel (19) an dem Querschlitten höhenverstellbar vorgesehen ist

16. Werkzeugmaschine nach einem der vorherigen Ansprüche, **dadurch gekennzeichnet, dass** auf der Werkstück-Halteeinrichtung (3) mindestens ein Drehtisch vorgesehen ist, der mit der Werkstück-Halteeinrichtung (3) über einen linearen Drehtisch-Rundmotor (13) mit Direktantrieb verbunden ist.

17. Werkzeugmaschine nach einem der Ansprüche 1 bis 15, **dadurch gekennzeichnet, dass** die Werkstück-Halteeinrichtung (3) ein Wendespanner (41) zum Schwenken einer Werkstück-Aufnahme in ihrer Drehachse ist.

18. Werkzeugmaschine nach einem der vorherigen Ansprüche, **dadurch gekennzeichnet, dass** der Stator (7, 15) des linearen Rundmotors (5, 13) der Werkstück-Halteeinrichtung, vorzugsweise auch des Drehtisches, einen Statorrahmen (32) mit in dem Statorrahmen ausgebildeter Wasserkühlung (30) aufweist.

19. Werkzeugmaschine nach einem der vorherigen Ansprüche, **dadurch gekennzeichnet, dass** der Stator (7, 15) des linearen Rundmotors (5, 13) der Werkstück-Halteeinrichtung, vorzugsweise auch des Drehtisches, einen Lamellenanker (34) zwischen Wicklungsbereichen (33) aufweist.

## Claims

1. Machine tool having at least the following features:
- a machine bed (1);
- a travelling spindle (19);
- two lateral receptacles (2) disposed on lateral regions of the machine bed (1), a clearance (4) being formed in each lateral receptacle (2);
- a workpiece-holding apparatus (3) which is provided in a pivotable manner in the clearances (4); and
- two motors (5) for pivoting the workpiece-holding apparatus (3), said motors (5) being provided with driven shafts (8),
each motor (5) being fastened to the lateral receptacle (2) by its motor housing (6);
**characterised in that**
- the motors (5) are disposed in the clearances (4) in the lateral receptacles (2);
- each motor (5) rests in the clearance (4) by its motor housing (6);
- each motor (5) is a direct drive, being a linear rotating motor (5) whose driven shaft is its rotor (8);
- the workpiece-holding apparatus (3) is rigidly connected to driven shafts (8) of the motors (5) and carried by said driven shafts (8); and
- motor bearings (37) belonging to the two motors are provided as the mounting for the workpiece-holding apparatus (3) ;
- the motors (5) are each devoid of an output gearbox; and
- the workpiece-holding apparatus (3) is merely mounted in the motor bearings (37) of the motors (5) and without bearings provided in the lateral receptacles (2).

2. Machine tool according to Claim 1, **characterised in that** the clearances (4) in the lateral receptacles (2) are in alignment and the machining space (18) of the machine tool is formed between said lateral receptacles (2).

3. Machine tool according to Claim 1 or 2, **characterised in that** the motors (5) are brushless.

4. Machine tool according to one of the preceding claims, **characterised in that** each motor (5) has a stator (7) which is fastened to the motor housing (6) and in which the rotor (8) is disposed.

5. Machine tool according to one of the preceding claims, **characterised in that** it is devoid of seals between the motors (5) and the machining space (18).

6. Machine tool according to one of the preceding claims, **characterised in that** the spindle (19) is capable of travelling three-dimensionally.

7. Machine tool according to Claim 6, **characterised in that** the spindle (19) has a joint, preferably a bending joint.

8. Machine tool according to one of the preceding claims, **characterised in that** the rotor (8) is fitted directly on a shaft of the workpiece-holding apparatus (3).

9. Machine tool according to one of claims 1 to 7, **characterised in that** the rotor (8) is fitted on a flange (10) to which the workpiece-holding apparatus (3) is rigidly fastened, preferably by its holding arms (11).

10. Machine tool according to one of the preceding claims, **characterised in that** at least one lateral receptacle is an attachment which is formed separately by the machine bed and is connected to said machine bed.

11. Machine tool according to one of the preceding claims, **characterised in that** at least one lateral receptacle is a sidewall (2) which is constructed in one piece with the machine bed (1).

12. Machine tool according to Claim 11, **characterised in that** both the lateral receptacles are sidewalls (2).

13. Machine tool according to Claim 12, **characterised in that** a lateral rail (17) for guiding a longitudinal carriage is disposed on each of the sidewalls (2).

14. Machine tool according to Claim 13, **characterised in that** the longitudinal carriage has transverse rails (29 a,b) for guiding a transporting carriage.

15. Machine tool according to Claim 14, **characterised in that** the spindle (19) is provided on the transverse carriage in a vertically adjustable manner.

16. Machine tool according to one of the preceding claims, **characterised in that** there is provided on the workpiece-holding apparatus (3) at least one turntable which is connected to said workpiece-holding apparatus (3) via a linear turntable-rotating motor (13) with direct drive.

17. Machine tool according to one of Claims 1 to 15, **characterised in that** the workpiece-holding apparatus (3) is a reversible clamping device (41) for pivoting a workpiece receptacle in its axis of rotation.

18. Machine tool according to one of the preceding claims, **characterised in that** the stator (7, 15) of the linear rotating motor (5, 13) of the workpiece-holding apparatus, and preferably also of the turntable, has a stator frame (32) with water cooling (30) constructed in said stator frame.

19. Machine tool according to one of the preceding claims, **characterised in that** the stator (7, 15) of the linear rotating motor (5, 13) of the workpiece-holding apparatus, and preferably also of the turntable, has a laminated armature (34) between winding regions (33).

## Revendications

1. Machine-outil présentant au moins les caractéristiques suivantes :
un socle de machine (1),
une broche déplaçable (19),
deux logements latéraux (2) disposés dans des zones latérales du socle de machine (1), un dégagement (4) étant formé dans chaque logement latéral (2),
un dispositif de maintien de pièce à usiner (3) prévu orientable dans les dégagements (4) et
deux moteurs (5) servant à orienter le dispositif de maintien de pièce à usiner (3), les moteurs (5) étant équipés d'arbres d'entraînement (8),
chaque moteur (5) étant fixé par l'intermédiaire de son bâti (6) sur le logement latéral (2),
**caractérisé en ce que**
les moteurs (5) sont disposés dans les dégagements (4) des logements latéraux (2),
que chaque moteur (5) adhère au dégagement (4) par l'intermédiaire de son bâti (6),
que chaque moteur (5) est un entraînement direct, le moteur étant un moteur rotatif linéaire (5) dont le rotor (8) est formé par son arbre d'entraînement,
que le dispositif de maintien de pièce à usiner (3) est relié de manière rigide à des arbres d'entraînement (8) des moteurs (5), par l'intermédiaire desquels il est porté et
que comme support du dispositif de maintien de pièce à usiner (3) sont prévus des paliers de moteur (37) des deux moteurs,
que les moteurs (5) sont respectivement libres d'un engrenage de départ et que le dispositif de maintien de pièce à usiner (3) est supporté uniquement dans les paliers (37) des moteurs (5) sans que d'autres supports soient prévus dans les logements latérales.

2. Machine-outil suivant la revendication 1, **caractérisée en ce que** les dégagements (4) dans les logements latéraux (2) sont alignés et que l'espace d'usinage (18) de la machine-outil est formé entre les logements latéraux (2).

3. Machine-outil suivant la revendication 1 ou 2, **caractérisée en ce que** les moteurs (5) sont des moteurs sans balais.

4. Machine-outil suivant une des revendications précédentes, **caractérisée en ce que** chaque moteur (5) présente un stator (7) qui est fixé sur le bâti du moteur (6) et dans lequel est disposé le rotor (8).

5. Machine-outil suivant une des revendications précédentes, **caractérisée en ce qu'**elle est libre de joints entre les moteurs (5) et l'espace d'usinage (18).

6. Machine-outil suivant une des revendications précédentes, **caractérisée en ce que** la broche (19) est déplaçable en trois dimensions.

7. Machine-outil suivant la revendication 6, **caractérisée en ce que** la broche (19) présente une articulation, de préférence une genouillère.

8. Machine-outil suivant une des revendications précédentes, **caractérisée en ce que** le rotor (8) est disposé directement sur un arbre du dispositif de maintien de pièce à usiner (3).

9. Machine-outil suivant une des revendications 1 à 7, **caractérisée en ce que** le rotor (8) est disposé sur une bride (10), sur laquelle le dispositif de maintien de pièce à usiner (3) est fixé de manière rigide de préférence au moyen de ses bras de support (11).

10. Machine-outil suivant une des revendications précédentes, **caractérisée en ce qu'**un logement latéral au moins est un chapeau conçu séparément du socle de machine et relié à celui-ci.

11. Machine-outil suivant une des revendications précédentes, **caractérisée en ce qu'**un logement latéral au moins est une paroi latérale (2) qui forme une seule pièce avec le socle de machine (1).

12. Machine-outil suivant la revendication 11, **caractérisée en ce que** les deux logements latéraux sont des parois latérales (2).

13. Machine-outil suivant la revendication 12, **caractérisée en ce qu'**est disposé sur les parois latérales (2) respectivement un rail latéral (17) servant au guidage d'un chariot longitudinal.

14. Machine-outil suivant la revendication 13, **caractérisée en ce que** le chariot longitudinal présente des rails transversaux (29 a,b) pour le guidage d'un chariot de transport.

15. Machine-outil suivant la revendication 14, **caractérisée en ce que** la broche (19) est prévue de manière réglable en hauteur au chariot transversal.

16. Machine-outil suivant une des revendications précédentes, **caractérisée en ce que** sur le dispositif de maintien de pièce à usiner (3) est prévue au moins une table tournante qui est reliée au dispositif de maintien de pièce à usiner (3) par l'intermédiaire d'un moteur rotatif de table tournante (13) à entraînement direct.

17. Machine-outil suivant une des revendications 1 à 15, **caractérisée en ce que** le dispositif de maintien de pièce à usiner (3) est un dispositif de serrage pivotant (41) servant à pivoter un logement de pièce à usiner autour de son arbre de rotation.

18. Machine-outil suivant une des revendications précédentes, **caractérisée en ce que** le stator (7, 15) du moteur rotatif linéaire (5, 13) du dispositif de maintien de pièce à usiner, de préférence également de la table tournante, présente un bâti de stator (32), avec un refroidissement par eau (30) conçu dans le bâti du stator.

19. Machine-outil suivant une des revendications précédentes, **caractérisée en ce que** le stator (7, 15) du moteur rotatif linéaire (5, 13) du dispositif de maintien de pièce à usiner, de préférence également de la table tournante, présente un induit à lamelles (34) entre des zones d'enroulement (33).
